# FASCICULE DE BREVET EUROPEEN

(11) **EP 4 112 951 B1**
(45) Date de publication et mention de la délivrance du brevet: **23.10.2024**
(21) Numéro de dépôt: 22182090.5
(22) Date de dépôt: 30.06.2022
(51) Int. Cl.: F16B 45/02

(54) **MOUSQUETON ET PROCÉDÉ DE FABRICATION**
KARABINERHAKEN UND HERSTELLUNGSVERFAHREN
CARABINER AND MANUFACTURING METHOD

(30) Priorité: 03.07.2021 FR 2107225
(43) Date de publication de la demande: 04.01.2023
(73) Titulaire: Zedel, 38920 Crolles (FR)
(72) Inventeur: MAURICE, Alain, 38660 Plateau des Petites Roches (FR); BERGEZ, Aurélie, 38610 Gières (FR)
(74) Mandataire: Talbot, Alexandre

(56) Documents cités:
- CN-U- 209 212 760
- FR-A1- 2 651 684
- JP-A- 2016 006 342
- US-A- 3 367 001
- US-A- 4 811 467
- US-A- 4 835 823

## Description

### Domaine technique

L'invention concerne un mousqueton et un procédé de fabrication d'un tel mousqueton.

### État de la technique

Dans les domaines des travaux en hauteur, de la spéléologie et de l'alpinisme, il est courant d'utiliser des mousquetons qui possèdent un doigt mobile associé à un ressort. Différentes configurations de doigts et de ressorts sont connues qui permettent d'associer le doigt et le ressort pour que le ressort déplace le doigt qui referme le mousqueton. Le ressort applique une force sur le doigt afin de le solliciter vers sa position de fermeture et ainsi refermer le mousqueton.

Il est connu du document US 8,234,761 de former un doigt ouvrable et refermable. Le doigt formé par un fil est déformable élastiquement et il est précontraint pour se placer contre le corps en l'absence de sollicitation extérieur. Le doigt est formé par un fil métallique qui possède deux points d'appui décalés selon le grand axe du mousqueton pour définir un axe de rotation du doigt ouvrable et un effet ressort.

Il est également connu une autre configuration de mousqueton avec un doigt mobile qui est creux. Le ressort est un ressort hélicoïdal monté à l'intérieur du doigt. Le ressort se déforme à l'intérieur du doigt. Une extrémité du ressort est en appui sur l'intérieur du doigt alors que l'autre extrémité vient en appui sur un poussoir qui prend appui sur le corps du mousqueton à proximité de l'axe de rotation entre le doigt et le corps. La rotation du doigt entraine la rotation du poussoir et la compression du ressort.

Différentes configurations de poussoirs sont connues avec notamment un téton qui s'enfonce à l'intérieur du ressort hélicoïdal. Dans une configuration, le poussoir possède une extrémité qui possède une section proche de la section de la cavité du doigt de manière à fermer la cavité. La rotation du doigt par rapport au corps correspond à la translation du poussoir dans la cavité ce qui applique une contrainte plus ou moins importante sur le ressort hélicoïdal. Le ressort est configuré pour repousser le poussoir ce qui correspond à un doigt dans la position de fermeture du mousqueton. Dans une autre configuration, le poussoir qui referme la cavité est replacé par une tige qui obstrue en partie la cavité et qui passe à travers au moins une partie du ressort hélicoïdal pour assurer une bonne connexion mécanique entre le poussoir et le ressort hélicoïdal.

Différentes configurations de mousquetons sont illustrées dans les documents EP 1710456, FR 2731255, EP 1703148, JP 2016-6342, US 4,835,823, FR 2651684 et CN 209212760.

Il est connu du document US3,367,001 un crochet s'ouvrant vers l'extérieur et dont le doigt est creux. L'intérieur du doigt reçoit un ressort hélicoïdal qui glisse le long de la surface extérieure du crochet. Le document US 4,811,467 divulguent un mousqueton muni d'un doigt muni d'un poussoir surmonté par une partie déformable élastiquement formant un ressort. Le poussoir et le ressort sont monolithiques.

### Exposé de l'invention

Un objet de l'invention consiste à pallier ces inconvénients, et plus particulièrement à fournir un mousqueton qui assure une meilleure coopération entre le ressort hélicoïdal et le poussoir tout en conservant un ensemble formé par le ressort et le poussoir qui est facile à installer dans le mousqueton et qui est économiquement viable.

On tend à résoudre ces inconvénients au moyen d'un mousqueton selon la revendication 1 qui possède
- un corps en forme de C,
- un doigt monté mobile entre une position d'ouverture et une position de fermeture, le doigt étant monté mobile en rotation par rapport au corps, le doigt définissant une cavité destinée à loger un ressort,
- un poussoir prenant appui sur le corps,
- un ressort installé dans la cavité du doigt et prenant appui sur le doigt et sur le poussoir pour solliciter le doigt vers la position de fermeture, le ressort étant un ressort hélicoïdal s'étendant selon l'axe longitudinal de la cavité.

Le mousqueton est remarquable en ce que le ressort et le poussoir sont montés fixement l'un sur l'autre pour former un ensemble monolithique.

Selon un aspect de l'invention, le ressort et le poussoir sont formés par un même fil métallique.

De manière préférentielle, le fil métallique a un diamètre constant d'une extrémité à l'autre du ressort et d'une extrémité à l'autre du poussoir.

Avantageusement, le poussoir est sous la forme d'un anneau, le ressort ayant deux appuis sur l'anneau.

Dans un mode de réalisation particulier, le support est sous la forme d'un L ou d'un U.

Selon un autre aspect, le poussoir est inclus dans un plan qui contient un diamètre du ressort.

L'invention a également pour objet un procédé de fabrication d'un mousqueton qui est plus facile à mettre en oeuvre que les procédés de l'art antérieur.

On tend à atteindre ce résultat au moyen d'un procédé de fabrication d'un mousqueton selon la revendication 8 comportant les étapes suivantes :
- fournir un corps en forme de C ;
- fournir un doigt, le doigt définissant une cavité destinée à loger un ressort ;
- fournir un ensemble monolithique formé par le ressort et un poussoir qui sont montés fixement l'un sur l'autre, le ressort étant un ressort hélicoïdal ;
- installer l'ensemble monolithique dans la cavité, le ressort étant installé dans la cavité du doigt, le ressort s'étendant selon l'axe longitudinal de la cavité ;
- monter le doigt sur le corps de manière mobile entre une position d'ouverture et une position de fermeture, le doigt étant monté mobile en rotation par rapport au corps, le poussoir prenant appui sur le corps et le ressort prenant appui sur le doigt et sur le poussoir pour solliciter le doigt vers la position de fermeture.

### Description des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement une vue en coupe d'un mousqueton avec le doigt en position de fermeture ;
- la figure 2, illustre schématiquement une vue en coupe d'un mousqueton avec le doigt en position d'ouverture ;
- la figure 3, illustre schématiquement une vue de face, une vue du côté droit, une vue du côté gauche, une vue de dessous et une vue de dessus d'un premier mode de réalisation d'un ensemble formé par un ressort couplé à un poussoir ;
- la figure 4, illustre schématiquement une vue de face, une vue du côté droit, une vue du côté gauche, une vue de dessous et une vue de dessus d'un deuxième mode de réalisation d'un ensemble formé par un ressort couplé à un poussoir ;
- la figure 5 illustre schématiquement une vue de face d'autres modes de réalisation d'un ensemble formé par un ressort couplé à un poussoir ;
- la figure 6 illustre schématiquement encore un autre mode de réalisation d'un ensemble formé par un ressort couplé à un poussoir avec une vue de face, une vue de côté et une coupe.

### Description détaillée

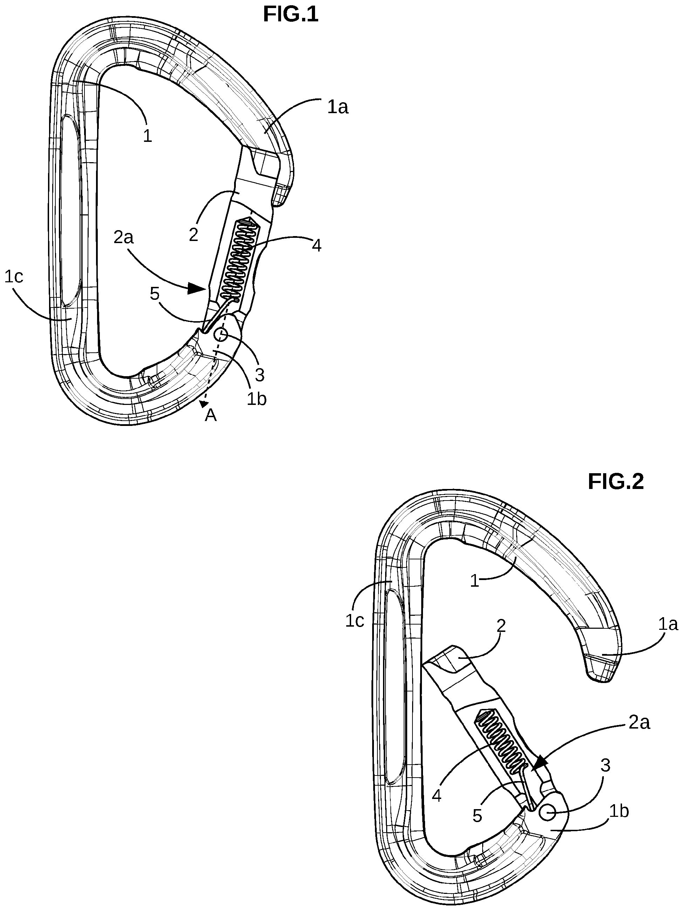

Les figures 1 et 2 illustrent une vue en coupe d'un mousqueton muni d'un corps 1, d'un doigt 2 et d'un arbre de rotation 3. Le corps 1 est en forme de C. Le doigt 2 est monté mobile en rotation par rapport au corps 1. Le doigt 2 est monté mobile en rotation autour d'un arbre de rotation 3. Le doigt 2 est monté mobile entre une position de fermeture (figure 1) et une position d'ouverture (figure 2). Dans la position de fermeture, le doigt 2 ferme le mousqueton qui définit alors un anneau fermé. Dans la position d'ouverture, le doigt 2 ferme le mousqueton qui définit alors un anneau ouvert qui autorise l'insertion d'un outil ou d'une sangle.

Le corps 1 présente une forme de C avec des première et seconde extrémités 1a et 1b opposées et qui se font face. La première extrémité 1a est reliée à la deuxième extrémité 1b par la portion de liaison 1c qui est préférentiellement rectiligne ou sensiblement rectiligne. Le doigt 2 est fixé à la seconde extrémité 1b au moyen de l'arbre de rotation 3. Dans la position de fermeture, le doigt 2 relie la première extrémité 1a à la seconde extrémité 1b.

Le doigt 2 définit une cavité 2a destinée à loger un ressort 4. Le mousqueton possède un ressort 4 et un poussoir 5. Le ressort 4 est un ressort hélicoïdal dont l'axe B de ressort est parallèle ou sensiblement parallèle à l'axe longitudinal A de la cavité 2a. Le ressort 4 possède une extrémité qui vient en appui contre le doigt 2. Le ressort hélicoïdal s'étend selon l'axe longitudinal A de la cavité 2a. L'axe longitudinal A de la cavité 2a passe ou est à proximité immédiate de l'axe de rotation du doigt 2 par rapport au corps 1. Le ressort 4 est formé par une pluralité de spires non-jointives de manière à travailler en compression. Le ressort 4 est comprimé entre une extrémité de la cavité 2a et le poussoir 5. L'utilisation d'un ressort hélicoïdal est plus avantageux qu'un ressort plat de l'art antérieur. Le poussoir 5 est différent d'un ressort hélicoïdal.

Le poussoir 5 est en appui direct contre le corps 1. Le poussoir 5 se loge dans un espace dédié du corps 1, par exemple sous la forme d'une cuvette ou d'un crochet aménagé dans le corps 1 pour bloquer une extrémité du poussoir 5. Le poussoir 5 sépare le ressort 4 et le corps 1. Cette configuration est plus avantageuse que celle illustrée dans le document US 3,367,001 car le poussoir peut intervenir dans la rotation du doigt quand ce dernier est déformé depuis son extrémité coincée dans la cuvette ou le crochet jusqu'à l'autre extrémité fixée au ressort.

La rotation du doigt 2 entraine le déplacement du poussoir 5 qui s'insère plus ou moins profondément dans la cavité 2a. L'insertion du poussoir 5 dans la cavité 2a sollicite le ressort 4 qui s'oppose à cette insertion. La rotation du doigt 2 depuis la position de fermeture jusqu'à la position d'ouverture se traduit par un enfoncement du poussoir 5 dans la cavité 2a et la compression du ressort 4.

Le poussoir 5 et le ressort 4 sont montés fixement l'un à l'autre de manière à former une seule et même pièce qui s'insère dans la cavité 2a lors du montage du ressort 4 dans la cavité 2a. La fixation mécanique du poussoir 5 sur le ressort 4 permet de définir précisément la transmission des efforts entre le poussoir 5 et le ressort 4. Cela permet de mieux définir le comportement du ressort 4 ainsi que le comportement du poussoir 5 lors de la rotation du doigt 2.

Dans les configurations de l'art antérieur où le poussoir possède une extrémité ayant une section sensiblement identique à la section de la cavité, il n'est pas possible d'avoir une complémentarité parfaite entre les deux pièces. Par ailleurs, pour éviter d'introduire du frottement entre le doigt 2 et le poussoir 5, il est recherché un poussoir 5 avec une section sensiblement plus faible que celle de la cavité. Malheureusement, cette configuration fait que la cavité 2a peut conserver de l'humidité ou des détritus lorsque les mousquetons sont utilisés dans des conditions difficiles, par exemple la spéléologie ou l'alpinisme. Cela peut entrainer un vieillissement prématuré du ressort 4 avec une modification de son comportement mécanique.

Dans les configurations où le poussoir 5 est sous la forme d'une tige qui s'introduit dans les spires du ressort 4, la largeur de la tige doit être suffisamment importante pour venir en contact des spires sur sensiblement un diamètre sans venir au contact de la paroi latérale de la cavité pour réduire les frottements. Les pièces étant de petites tailles, l'installation du ressort et du poussoir est une opération minutieuse. Le comportement du doigt 2 peut varier selon la manière d'installer le ressort 4 et le poussoir 5. Le ressort 4 et le poussoir 5 se déplacent l'un par rapport à l'autre. A la suite des multiples déplacements du doigt 2 entre sa position d'ouverture et sa position de fermeture, la liaison mécanique entre le ressort 4 et le poussoir 5 évolue ce qui fait évoluer le comportement du doigt 2 avec le temps.

Il est donc particulièrement avantageux d'avoir un ressort 4 et un poussoir 5 qui sont irrémédiablement fixés l'un à l'autre de manière à former un ensemble dont le comportement mécanique est mieux maitrisé et notamment au fur et à mesure de l'utilisation du mousqueton. La fixation mécanique du ressort 4 avec le poussoir 5 permet de mieux maitriser le comportement mécanique de l'ensemble formé par le ressort 4 et le poussoir 5 tout au long de la rotation du doigt 2 entre la position de fermeture et la position d'ouverture. Il est particulièrement avantageux de prévoir que l'extrémité du ressort 4 en contact avec le poussoir 5 ne soit pas totalement obturée de manière à faciliter l'extraction de la glace, de la boue ou du sable qui peut s'introduire dans le ressort 4. Selon les configurations, le poussoir 5 n'obture pas ou peu le trou central du ressort dans son extrémité proximale du poussoir 5.

Dans un mode de réalisation particulier, la fixation du ressort 4 avec le poussoir 5 permet de définir une charnière avec déformation élastique.

Dans une configuration avantageuse, le poussoir 5 et le ressort 4 sont formés par une seule et même pièce de manière à former un ensemble monolithique, c'est-à-dire indémontable.

De manière préférentielle, le ressort 4 et le poussoir 5 sont formés en matériau métallique, de préférence dans la même nuance de métal et encore plus préférentiellement dans une même étape technologique de manière à former un ensemble dont les performances mécaniques sont encore mieux maitrisées.

Dans un mode de réalisation privilégié, le ressort 4 est formé par un fil, de préférence un fil métallique, qui forme le ressort hélicoïdal et le fil qui s'étend à partir du ressort 4 est utilisé pour former le poussoir 5. Avantageusement, la section droite du fil est circulaire. Il est particulièrement avantageux d'utiliser un fil métallique de section circulaire ce qui réduit fortement l'usure du poussoir 5 et/ou du corps 2 en comparaison d'un poussoir formé par une plaque comme cela est illustré dans le document EP 1710456. Préférentiellement, la section du fil est identique entre le ressort 4 et le poussoir 5, c'est-à-dire constante d'une extrémité à l'autre du ressort 4 et d'une extrémité à l'autre du poussoir 5. Il est également possible de prévoir un poussoir 5 dans un fil qui est plus épais que le fil formant le ressort 4 de manière à former un poussoir à déformation réduite. Préférentiellement, le fil métallique est déformé pour définir le ressort 4 puis le reste du fil métallique se prolongeant du ressort 4 est déformé pour former le poussoir 5. Dans une alternative de réalisation, le fil métallique est déformé pour définir le poussoir 5 puis le reste du fil métallique se prolongeant du poussoir 5 est déformé pour former le ressort 4. Le fil métallique s'étendant entre le ressort 4 et le poussoir 5 permet de mieux maitriser la connexion métallique entre ces deux éléments ainsi que l'orientation du poussoir à la jointure entre le poussoir 5 et le ressort 4.

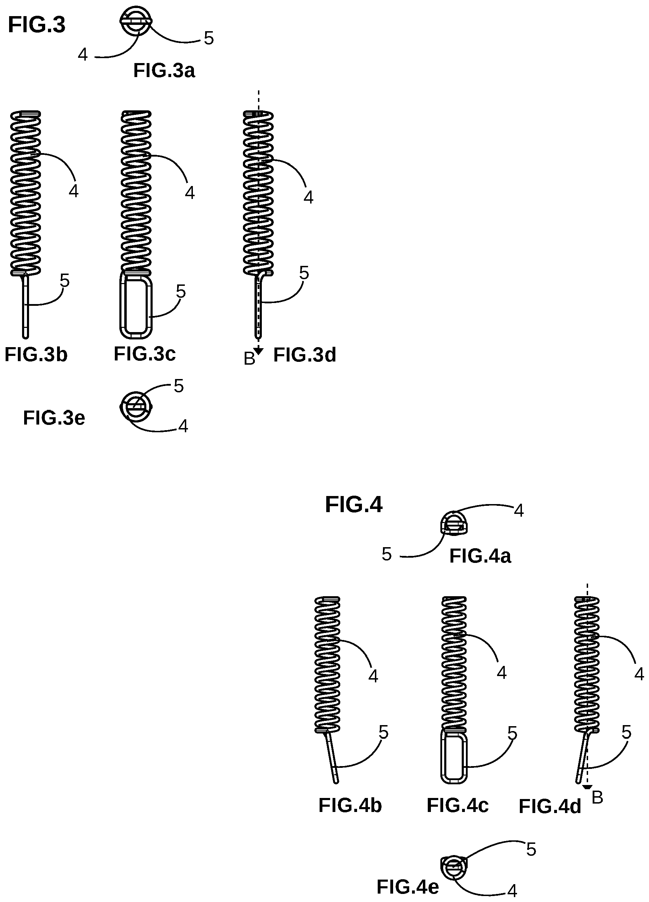

Avantageusement, le poussoir 5 se présente sous la forme d'un anneau. L'anneau peut avoir une forme quelconque. Une extrémité de l'anneau est en appui sur le corps 1. L'autre extrémité de l'anneau est en appui sur le ressort 4. Dans une configuration préférentielle illustrée aux figures 3 et 4, une partie de l'anneau s'étend à partir du ressort 4. La spire inférieure du ressort 4 est en appui sur l'anneau du poussoir 5 afin de limiter la déformation du ressort 4 par flexion.

Il est particulièrement avantageux de prévoir un poussoir 5 qui est ajouré dans une direction perpendiculaire à la direction B. Le poussoir 5 peut se présenter sous la forme d'un anneau ou d'un crochet de forme quelconque tant qu'il assure la transmission de la force de compression sur le ressort 4 lors de la rotation du doigt 2. En utilisant un poussoir 5 ajouré, on facilite l'évacuation de glace et de sable qui peut s'installer entre le corps 1 et le poussoir 5. A chaque fois que le doigt 2 est déplacé le poussoir 5 se déplace par rapport au corps 1 ce qui peut engendrer un vieillissement accéléré du doigt 2 et/ou du poussoir 5 ainsi qu'une évolution de l'interface entre le doigt 2 et le poussoir 5. L'utilisation d'un poussoir 5 ajouré doit permettre un fonctionnement plus homogène du doigt 2 dans le temps.

Il est avantageux de former un poussoir 5 sous la forme d'un anneau de manière à limiter sa déformation selon l'axe de ressort B et ainsi mieux solliciter le ressort 4.

Dans une configuration particulière, le poussoir 5 n'est pas sous la forme d'un anneau et par exemple sous la forme d'un L ou d'un U. Il n'y a pas de reprise d'appui de la spire inférieure du ressort 4 sur deux points distincts du poussoir 5, mais seulement sur un seul point. Selon que le ressort 4 vient en appui sur un point, deux points ou plus de deux points du poussoir 5, il est possible de modifier le comportement mécanique de l'ensemble lors de la rotation du doigt 2.

Dans le mode de réalisation illustré aux figures 3 et 4, le poussoir 5 est illustré sous la forme d'un anneau rectangulaire. Il est possible de modifier cette forme afin de modifier le comportement mécanique du poussoir 5.

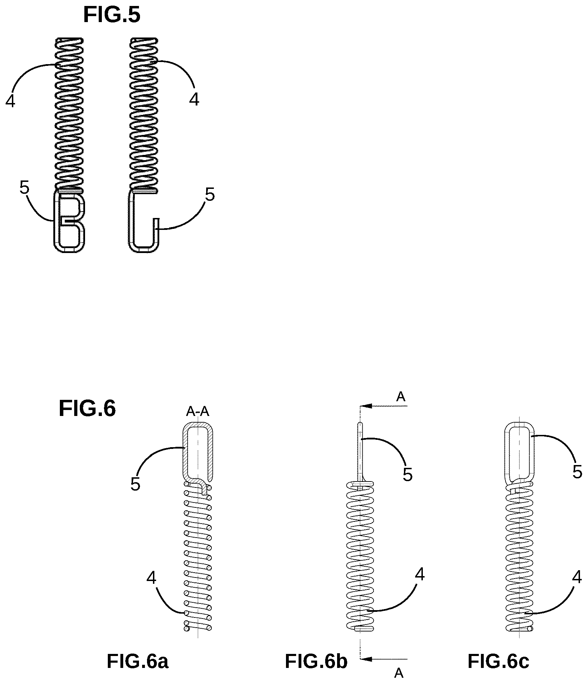

La figure 5 illustre différentes configurations d'un poussoir afin de modifier son comportement mécanique et donc le comportement mécanique du ressort 4 fixé au poussoir 5. La figure 5a illustre un poussoir 5 avec un renfort latéral formé par un pli de matière. La figure 5b illustre un poussoir en forme de U et qui présente un seul point de contact entre le ressort 4 et le poussoir 5.

La figure 3 illustre un ressort 4 qui est hélicoïdal et avec un poussoir 5 qui s'étend exclusivement selon un diamètre de la section circulaire du ressort 4. Les figures 3a, 3b, 3c, 3d et 3e représentent respectivement une vue de dessus, une vue de côté gauche, une vue de face, une vue de côté droit et une vue de dessous d'un mode de réalisation d'un ensemble formé par le ressort 4 et le poussoir 5. En alternative, la figure 4 illustre un ressort 4 qui est hélicoïdal et qui est associé à un poussoir 5 qui définit un plan et le plan définit un angle avec la direction contenant les différents centres de l'hélice du ressort hélicoïdal. Les figures 4a, 4b, 4c, 4d et 4e représentent respectivement une vue de dessus, une vue de côté gauche, une vue de face, une vue de côté droit et une vue de dessous d'un autre mode de réalisation d'un ensemble formé par le ressort 4 et le poussoir 5.

L'inclinaison du poussoir 5 par rapport à la direction d'extension du ressort 4 hélicoïdal permet de modifier le comportement mécanique de l'ensemble formé par le ressort 4 et le poussoir 5.

La figure 6 illustre un autre mode de réalisation de l'ensemble formé par le ressort 4 et le poussoir 5. Le poussoir 5 s'étend à partir du ressort 4 et il vient en appui sur le ressort 4 sur la portion diamétralement opposée à la connexion entre le ressort 4 et le poussoir 5. Ce montage est clairement visible sur la vue en coupe de la figure 6a. Il est avantageux que le poussoir 5 s'insère en partie à l'intérieur du ressort 4 de manière à rigidifier la portion qui réalise la connexion mécanique entre le ressort 4 et le poussoir 5 et ainsi mieux maitriser la transmission des efforts entre le ressort 4 et le poussoir 5. Une telle connexion mécanique entre le poussoir 5 et le ressort 4 permet de réaliser une fermeture plus efficace du doigt 2. De manière conventionnelle, le ressort 4 sollicite le doigt 2 vers la position de fermeture du doigt de sorte qu'en l'absence de sollicitation sur le doigt, le ressort 4 ferme le mousqueton.

Le mousqueton peut être fabriqué au moyen d'un procédé de fabrication qui comporte :
- fournir un corps 1 en forme de C ;
- fournir un doigt 2, le doigt 2 définissant une cavité 2a destinée à loger un ressort 4 ;
- fournir un ensemble monolithique formé par le ressort 4 et un poussoir 5 qui sont montés fixement l'un sur l'autre, le ressort 4 étant un ressort hélicoïdal ;
- installer l'ensemble monolithique dans la cavité 2a, le ressort 4 étant installé dans la cavité 2a du doigt 2, le ressort 4 s'étendant selon l'axe longitudinal de la cavité 2a ;
- monter le doigt 2 sur le corps 1 de manière mobile entre une position d'ouverture et une position de fermeture, le doigt 2 étant monté mobile en rotation par rapport au corps 1, le poussoir 5 prenant appui sur le corps 1 et le ressort 4 prenant appui sur le doigt 2 et sur le poussoir 5 pour solliciter le doigt 2 vers la position de fermeture.

Il est possible d'améliorer un mousqueton de l'art antérieur en remplaçant le ressort 4 et le poussoir 5 par un ensemble formé un ressort monté fixement à un poussoir 5 selon l'une des multiples configurations décrites précédemment.

Selon les configurations, le doigt 2 peut être monté sur le corps 1 avant d'installé le ressort 4 et le poussoir 5 ou le corps et le poussoir sont montés dans le doigt avant que ce dernier soit fixé au corps.

## Revendications

1. Mousqueton comportant :
- un corps (1) en forme de C,
- un doigt (2) monté mobile en rotation, par rapport au corps (1) entre une position d'ouverture et une position de fermeture, le doigt (2) se rapprochant d'une portion de liaison (1c) du corps (1) lors d'un mouvement du doigt (2) depuis la position de fermeture vers la position d'ouverture, le doigt (2) définissant une cavité (2a) destinée à loger un ressort (4),
- un poussoir (5) prenant appui sur le corps (1), le poussoir (5) se logeant dans un espace dédié du corps (1) pour bloquer une extrémité du poussoir (5),
- un ressort (4) installé dans la cavité (2a) du doigt (2) et prenant appui sur le doigt (2) et sur le poussoir (5) pour solliciter le doigt (2) en rotation vers la position de fermeture, le ressort (4) étant un ressort hélicoïdal ayant un axe de ressort (B) s'étendant selon l'axe longitudinal de la cavité (2a),
mousqueton **caractérisé en ce que** le ressort (4) et le poussoir (5) sont montés fixement l'un sur l'autre pour former un ensemble monolithique.

2. Mousqueton (1) selon la revendication 1 dans lequel le ressort (4) et le poussoir (5) sont formés par un même fil métallique.

3. Mousqueton (1) selon la revendication 2 dans lequel le fil métallique a un diamètre constant d'une extrémité à l'autre du ressort (4) et d'une extrémité à l'autre du poussoir (5).

4. Mousqueton (1) selon l'une quelconque des revendications précédentes dans lequel le poussoir (5) est ajouré perpendiculairement à l'axe de ressort (B).

5. Mousqueton (1) selon la revendication précédente dans lequel le poussoir (5) est sous la forme d'un anneau, le ressort (4) ayant deux appuis sur l'anneau.

6. Mousqueton (1) selon la revendication 4 dans lequel le poussoir (5) est sous la forme d'un L ou d'un U selon une direction d'observation perpendiculaire à l'axe de ressort (B).

7. Mousqueton (1) selon l'une quelconque des revendications 4 à 6 dans lequel le poussoir (5) est inclus dans un plan qui contient un diamètre du ressort (4).

8. Procédé de fabrication d'un mousqueton comportant les étapes suivantes :
- fournir un corps (1) en forme de C ;
- fournir un doigt (2) monté mobile en rotation, par rapport au corps (1) entre une position d'ouverture et une position de fermeture, le doigt (2) se rapprochant d'une portion de liaison (1c) du corps (1) lors d'un mouvement du doigt (2) depuis la position de fermeture vers la position d'ouverture, le doigt (2) définissant une cavité (2a) destinée à loger un ressort (4) ;
- fournir un ensemble monolithique formé par un ressort (4) et un poussoir (5) qui sont montés fixement l'un sur l'autre, le ressort (4) étant un ressort hélicoïdal ;
- installer l'ensemble monolithique dans la cavité (2a), le ressort (4) étant installé dans la cavité (2a) du doigt (2), le ressort (4) s'étendant selon l'axe longitudinal de la cavité (2a), le poussoir (5) prenant appui sur le corps (1), le poussoir (5) se logeant dans un espace dédié du corps (1) pour bloquer une extrémité du poussoir (5), l'ensemble sollicitant le doigt (2) en rotation vers la position de fermeture.

## Patentansprüche

1. Karabinerhaken, umfassend:
- einen C-förmigen Körper (1),
- einen Finger (2), der in Bezug auf den Körper (1) zwischen einer Öffnungsposition und einer Schließposition drehbeweglich montiert ist, wobei der Finger (2) sich bei einer Bewegung des Fingers (2) von der Schließposition in die Öffnungsposition einem Verbindungsabschnitt (1c) des Körpers (1) nähert, wobei der Finger (2) einen Hohlraum (2a) definiert, der dazu bestimmt ist, eine Feder (4) aufzunehmen,
- einen Drücker (5), der auf dem Körper (1) zur Auflage kommt, wobei der Drücker (5) in einen dedizierten Raum des Körpers (1) aufgenommen wird, um ein Ende des Drückers (5) zu blockieren,
- eine Feder (4), die im Hohlraum (2a) des Fingers (2) installiert ist und am Finger (2) und am Drücker (5) zur Auflage kommt, um den Finger (2) zur Drehung in die Schließposition vorzuspannen, wobei die Feder (4) eine Schraubenfeder ist, deren Federachse (B) sich entlang der Längsachse des Hohlraums (2a) erstreckt,
wobei der Karabinerhaken **dadurch gekennzeichnet ist, dass** die Feder (4) und der Drücker (5) fest aneinander montiert sind, um eine monolithische Einheit zu bilden.

2. Karabinerhaken (1) nach Anspruch 1, wobei die Feder (4) und der Drücker (5) aus einem selben Metalldraht gebildet sind.

3. Karabinerhaken (1) nach Anspruch 2, wobei der Metalldraht von einem Ende der Feder (4) zum anderen und von einem Ende des Drückers (5) zum anderen einen konstanten Durchmesser hat.

4. Karabinerhaken (1) nach einem der vorherigen Ansprüche, wobei der Drücker (5) senkrecht zur Federachse (B) durchbrochen ist.

5. Karabinerhaken (1) nach dem vorherigen Anspruch, wobei der Drücker (5) in Form eines Rings vorliegt, wobei die Feder (4) zwei Auflager auf dem Ring aufweist.

6. Karabinerhaken (1) nach Anspruch 4, wobei der Drücker (5) senkrecht zur Federachse (B) gesehen L- oder U-förmig ist.

7. Karabinerhaken (1) nach einem der Ansprüche 4 bis 6, wobei der Drücker (5) in einer Ebene liegt, die einen Durchmesser der Feder (4) enthält.

8. Verfahren zur Herstellung eines Karabinerhakens, umfassend die folgenden Schritte:
- Bereitstellen eines C-förmigen Körpers (1);
- Bereitstellen eines Fingers (2), der in Bezug auf den Körper (1) zwischen einer Öffnungsposition und einer Schließposition drehbeweglich montiert ist, wobei der Finger (2) sich bei einer Bewegung des Fingers (2) von der Schließposition in die Öffnungsposition einem Verbindungsabschnitt (1c) des Körpers (1) nähert, wobei der Finger (2) einen Hohlraum (2a) definiert, der dazu bestimmt ist, eine Feder (4) aufzunehmen;
- Bereitstellen einer monolithischen Einheit, die aus einer Feder (4) und einem Drücker (5) gebildet ist, die fest aneinander montiert sind, wobei die Feder (4) eine Schraubenfeder ist;
- Installieren der monolithischen Einheit in den Hohlraum (2a), wobei die Feder (4) im Hohlraum (2a) des Fingers (2) installiert wird, wobei die Feder (4) sich entlang der Längsachse des Hohlraums (2a) erstreckt, wobei der Drücker (5) am Körper (1) zur Auflage kommt, wobei der Drücker (5) in einem dedizierten Raum des Körpers (1) aufgenommen wird, um ein Ende des Drückers (5) zu blockieren, wobei die Einheit den Finger (2) zur Drehung in die Schließposition vorspannt.

## Claims

1. Carabiner comprising:
- a C-shaped body (1),
- a gate (2) mounted rotatable, with respect to the body (1), between an open position and a closed position, the gate (2) moving toward a connecting portion (1c) of the body (1) when the gate (2) moves from the closed position to the open position, the gate (2) defining a cavity (2a) designed to house a spring (4),
- a pusher (5) pressing on the body (1), the pusher (5) fitting in a dedicated space of the body (1) to block one end of the pusher (5);
- a spring (4) installed in the cavity (2a) of the gate (2) and pressing on the gate (2) and on the pusher (5) to bias the gate (2) in rotation to the closed position, the spring (4) being a coil spring having a spring axis (B) extending along the longitudinal axis of the cavity (2a),
carabiner **characterised in that** the spring (4) and the pusher (5) are fixedly mounted on one another to form a monolithic assembly.

2. Carabiner (1) according to claim 1 wherein the spring (4) and pusher (5) are formed by one and a same metal wire.

3. Carabiner (1) according to claim 2 wherein the metal wire has a constant diameter from one end of the spring (4) to the other and from one end of the pusher (5) to the other.

4. Carabiner (1) according to any of the preceding claims wherein the pusher (5) is apertured perpendicularly to the spring axis (B).

5. Carabiner (1) according to the preceding claims wherein the pusher (5) is in the form of a ring, the spring (4) having two pressing points on the ring.

6. Carabiner (1) according to claim 4 wherein the pusher (5) is L-shaped or U-shaped in a direction of observation perpendicular to the spring axis (B).

7. Carabiner (1) according to any one of claims 4 to 6 wherein the pucher (5) is included in a plane which contains a diameter of the spring (4).

8. Method for manufacturing a carabiner comprising the following steps:
- providing a C-shaped body (1) ;
- providing a gate (2) mounted rotatable, with respect to the body (1), between an open position and a closed position, the gate (2) moving toward a connecting portion (1c) of the body (1) when the gate (2) moves from the closed position to the open position, the gate (2) defining a cavity (2a) designed to house a spring (4);
- providing a monolithic assembly formed by a spring (4) and a pusher (5) which are fixedly mounted on one another, the spring (4) being a coil spring;
- installing the monolithic assembly in the cavity (2a), the spring (4) being installed in the cavity (2a) of the gate (2), the spring (4) extending along the longitudinal axis of the cavity (2a), the pusher (5) pressing on the body (1), the pusher (5) being fitted in a dedicated space of the body (1) to block one end of the pusher (5), the assembly biasing the gate (2) in rotation to the closed position.
